(19) Europäisches Patentamt
European Patent Office
Office européen des brevets

(11) **EP 2 721 723 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(21) Anmeldenummer: **12726349.9**

(22) Anmeldetag: **08.05.2012**

(51) Int Cl.:
*H02K 1/27* (2006.01)      *H02K 29/03* (2006.01)

(86) Internationale Anmeldenummer:
**PCT/EP2012/001972**

(87) Internationale Veröffentlichungsnummer:
**WO 2012/171602 (20.12.2012 Gazette 2012/51)**

(54) **SYNCHRONMOTOR**

SYNCHRONOUS MOTOR

MOTEUR SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2011 DE 102011106628**

(43) Veröffentlichungstag der Anmeldung:
**23.04.2014 Patentblatt 2014/17**

(73) Patentinhaber: **Sew-Eurodrive GmbH & Co. KG
76646 Bruchsal (DE)**

(72) Erfinder: **NESTLER, Helmut
76646 Bruchsal (DE)**

(56) Entgegenhaltungen:
**EP-A1- 2 073 352      EP-A1- 2 192 670
DE-A1- 10 053 692      DE-A1-102005 019 370
JP-A- H02 111 238      JP-A- H02 211 031
JP-A- 2004 194 419**

EP 2 721 723 B1

**Beschreibung**

Die Erfindung betrifft einen Synchronmotor.

Es ist bekannt, bei einem Rotor eines Synchronmotors ein stanzpaketiertes Blechpaket einzusetzen, an dessen äußerer Oberfläche Dauermagnete vorgesehen sind. Entsprechende Beispiele Können den Druckschriften JP2004194419, EP 2073352, JPH02211031 und DE102005019370 entnommen werden.

Der Erfindung liegt daher die Aufgabe zugrunde, einen einfach zu regelnden Synchronmotor auszubilden.

Erfindungsgemäß wird die Aufgabe bei dem Synchronmotor nach den in Anspruch 1 angegebenen Merkmalen gelöst.

Wichtige Merkmale der Erfindung bei dem Synchronmotor sind, dass er einen Stator mit Statorwicklung und einen Rotor aufweist, auf dem magnetische Pole aus dauermagnetischem Material gebildet sind,

wobei jeder Pol eine gewölbte Außenkontur aufweist, insbesondere eine nach radial außen gewölbte Außenkontur,

insbesondere wobei in Umfangsrichtung 2 x p Pole, insbesondere also Einzelpole, ausgeprägt sind, wobei p die Polpaaranzahl ist.

Von Vorteil ist dabei, dass die Dauermagnete bei einem Pol eines Polpaars nach radial außen und bei dem anderen Pol des Polpaars nach radial innen magnetisiert angeordnet sind. Außerdem ist durch die nach radial außen gewölbte Ausbildung jedes Pols ein besonderes verringertes Rastmoment erreichbar und somit eine besonders einfach zu regelnde, elektromotorische Anordnung ausgebildet.

Dabei wird unter Wölbung verstanden, dass der jeweilige Pol in Umfangsrichtung von seiner ersten Polkante bis zu seiner anderen Polkante zunehmende und dann wieder abnehmende Außendurchmesser aufweist. Dabei ist das dauermagnetische Material eines Pols zwar einstückig ausführbar und somit gewölbt und dabei glatt gekrümmt ausführbar. Jedoch ist die Herstellung solch eines einstückigen gewölbten dauermagnetischen Körpers aufwendig und daher kostspielig. Alternativ ist die gewölbte Struktur auch aus Einzelnen Dauermagneten realisierbar, wobei die Schwerpunkte und/oder Mittelpunkte der Dauermagnete entlang einer gedachten gewölbten Linie angeordnet sind. Vorzugsweise ist die Linie ein Kreisbogenabschnitt. Bei quaderförmigen Dauermagneten ist somit auch eine gewölbte gedachte Linie vorhanden, welche jeweils zumindest eine Kante jedes Dauermagneten verbindet. Auch diese Linie ist vorzugsweise ein Kreisbogenabschnitt.

Zur Realisierung der Wölbung ist ein Außenflächenabschnitt eines Dauermagneten auf einem größeren oder kleineren Radialabstand angeordnet als der entsprechende Außenflächenabschnitt eines in Umfangsrichtung direkt benachbarten Dauermagneten desselben Pols. Somit ist die Wölbung diskretisiert realisiert.

Bei einer vorteilhaften Ausgestaltung nimmt der umschreibende Radialabstand der äußeren Oberfläche des jeweiligen Pols in Umfangsrichtung von der Mitte des Pols aus ab, insbesondere bis zur in Umfangsrichtung außen liegenden Polkante,

insbesondere wobei der umschreibende Kreis derjenige ist, welcher die Dauermagnete nicht schneidet sondern nur berührt, also nur einen oder zwei Schnittpunkte aufweist mit dem jeweiligen Dauermagnet. Von Vorteil ist dabei, dass somit eine einfach herstellbare kreisförmige Wölbung realisierbar ist.

Bei einer vorteilhaften Ausgestaltung weist jeder Pol zwei oder mehr Dauermagnete auf,

insbesondere wobei die Dauermagnete gleichartig ausgeführt sind,

insbesondere wobei die Dauermagnete jeweils quaderförmig ausgeführt sind. Von Vorteil ist dabei, dass eine besonders einfache Herstellung ausführbar ist, da die Herstellung von quaderförmigen Dauermagneten einfach und kostengünstig ausführbar ist. Zur Herstellung des Pols müssen also nur die Dauermagnete auf entsprechend eben ausgeführte Flächenabschnitte des Blechpaketes geklebt werden, wobei das Blechpaket derart geformt ist, dass die Wölbung des Pols erreicht wird, auch wenn die Dauermagnete quaderförmig und gleichartig ausgeführt sind.

Bei einer vorteilhaften Ausgestaltung sind die Dauermagnete auf einem aus gestapelten Einzelblechen Blechpaket angeordnet, insbesondere wobei jeder Dauermagnet auf einem ebenen Flächenabschnitt des Blechpakets aufgesetzt und verbunden ist, wobei das Flächenstück sich in der Stapelrichtung und quer dazu erstreckt. Von Vorteil ist dabei, dass eine einfache Herstellung ermöglicht ist. Insbesondere ist ein Klebeverbinden der Dauermagnete mit dem Blechpaket einfach ausführbar.

Bei einer vorteilhaften Ausgestaltung ist die Stator-Nutzahl $N_1$ des Stators derart gewählt, dass die Ungleichung

$$\alpha_P \times N_1 \neq 2 \times p \times N_M$$

erfüllt ist, wobei $\alpha_P$ die Polbedeckung ist, p die Polpaarzahl und $N_M$ die Anzahl der Dauermagnete pro Pol. Von Vorteil ist dabei, dass ein verringertes Nutrasten und/oder Polrasten erreichbar ist. Somit ist eine verringerte Drehmomentwelligkeit vorhanden und der Synchronmotor ist besser regelbar.

Bei einer vorteilhaften Ausgestaltung weist die Wölbung einen Wölbungsradius $R_{pa}$ auf, der stärker gekrümmt ist als der Radius $D_{i1}/2$ der Aufnahmeausnehmung im Stator, insbesondere so dass gilt:

$$R_{pa} < -\delta + D_{i1}/2$$

wobei δ der Luftspalt zwischen maximalem Außenradius des Rotors und minimalem Innenradius der Aufnahmeausnehmung im Stator zur Aufnahme des Rotors ist und wobei $D_{i1}$ der Durchmesser der Aufnahmeausnehmung im Stator zur Aufnahme des Rotors ist. Von Vorteil ist dabei, dass der Pol gewölbt ausgeführt ist, also mit einer stärkeren Krümmung als ein Kreis, dessen Mittelpunkt auf der Rotorachse liegt und dessen Radius den auf größtem Radialabstand liegenden Punkt der Oberfläche des Pols berührt.

Bei einer vorteilhaften Ausgestaltung gilt für die Polbedeckung:

$0,8 \leq \alpha_P \leq 0,85$. Von Vorteil ist dabei, dass wiederum die Rastmomente und Drehmomentwelligkeit des Synchronmotors verringerbar sind.

Bei einer vorteilhaften Ausgestaltung ist der an den Polkanten auftretende maximale Luftspalt zwischen Pol und Aufnahme Ausnehmung derart gewählt, dass gilt:

$$2 \times \delta \leq \delta_{max} \leq 3 \times \delta$$

, insbesondere so dass die Wölbung sich also radial über weniger als das Doppelte des Luftspalts erstreckt, aber mindestens über eine dem Luftspaltabstand entsprechenden Radialabstands-Bereich sich erstreckt. Von Vorteil ist dabei, dass wiederum die Nutrastmomente verringerbar sind.

Bei einer vorteilhaften Ausgestaltung weist der Pol in axialer Richtung zwei gleichartige Abschnitte auf, zwischen welchen ein Versatz in Umfangsrichtung vorhanden ist, der einen Versatzwinkel von 180° / KGV($N_1$, 2 x p) beträgt, wobei
KGV das kleinste gemeinsame Vielfache bezeichnet,
$N_1$ die Stator-Nutanzahl und
p die Polanzahl. Von Vorteil ist dabei, dass Drehmomentwelligkeit und Nutrastmoment des Synchronmotors verringerbar sind.

Bei einer vorteilhaften Ausgestaltung ist die Stapelrichtung des Blechpakets in axialer Richtung ausgeführt. Von Vorteil ist dabei, dass die ebene Verbindungfläche durch Klebstoff herstellbar ist, der sich in Stapelrichtung vorhandenen Rauigkeiten sozusagen festkrallt. Auf diese Weise ist eine erhöhte Festigkeit der Verbindung erreichbar.

Bei einer vorteilhaften Ausgestaltung weisen der die Pole in axialer Richtung einen kontinuierlichen oder diskret angenäherten Schrägungswinkel auf. Von Vorteil ist dabei, dass Drehmomentwelligkeit und Nutrastmoment des Synchronmotors verringerbar sind und somit wiederum eine verbesserte Regelbarkeit des Synchronmotors erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

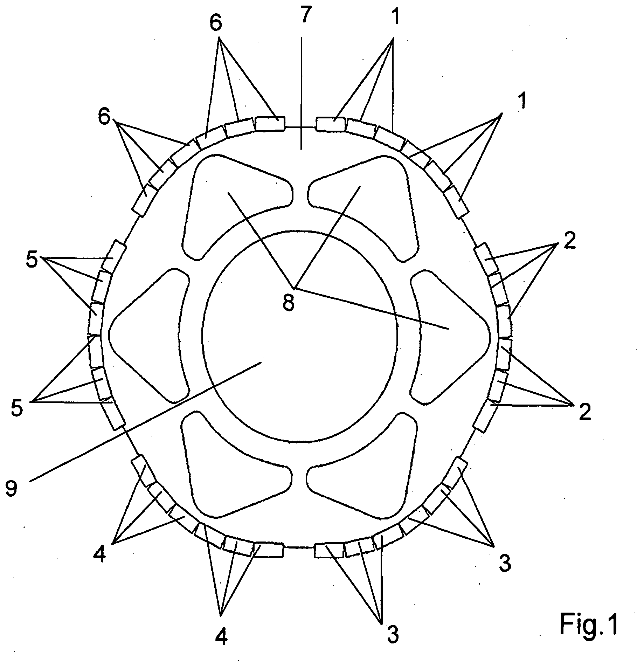

In der Figur 1 ist der Rotor eines Synchronmotors gezeigt, wobei die in einer mittig angeordneten Ausnehmung 9 aufnehmbare Rotorwelle ausgeblendet ist.

Auf der in der Ausnehmung 9 einführbaren Rotorwelle ist ein Blechpaket 7 angeordnet, das aus verbundenen, vorzugsweise stanzpaketiert und/oder schweißverbundenen, Einzelblechen zusammengesetzt ist.

Am äußeren Umfang des Blechpakets 7 sind Dauermagnete (1, 2, 3, 4, 5, 6) angeordnet, wobei ein magnetischer Pol aus mehreren Dauermagneten (1, 2, 3, 4, 5, 6) gebildet ist. In Figur 1 wird jeder Pol aus sechs Dauermagneten (1, 2, 3, 4, 5, 6) gebildet.

In Umfangsrichtung sind zwischen den Polen jeweils Lücken angeordnet.

Mittels der mehrstückigen Ausbildung eines Pols, also der Bildung eines Pols aus jeweils sechs Dauermagneten (1, 2, 3, 4, 5, 6) sind die Wirbelstromverluste reduziert.

Die Dauermagnete (1, 2, 3, 4, 5, 6) sind in radialer Richtung magnetisiert.

Jeder Pol weist einen maximalen Außenradius auf, der in Umfangsrichtung mittig im Winkelbereich des Pols angeordnet ist.

Von der Umfangsposition des maximalen Außenradius bis zum jeweiligen an den Pol angrenzenden Lücke nimmt der Außenradius des Pols ab. Die äußere Einhüllende des Pols ist also beidseitig in Umfangsrichtung gewölbt ausgeführt.

Dabei ist der jeweilige Pol jeweils aus sechs einzelnen Dauermagneten zusammengesetzt, die auf dem Blechpaket aufgeklebt sind. Jeder Dauermagnet ist hierbei quaderförmig ausgeformt und an einer jeweils für ihn vorgesehenen ebenen Außenfläche des Blechpakets 7 angeklebt. Die radiale Außenfläche des Blechpakets 7 ist also im Bereich des Pols in einem Querschnitt, wobei die Normale zur Schnittebene in axialer Richtung ausgerichtet ist, polygonal ausgeführt, wobei im jeweils ebenen Bereich des Polygons sich in axialer Richtung eine Klebefläche erstreckt.

Die Anzahl der Dauermagnete pro Pol beträgt also $N_M$ = 6. Der Rotor weist die Polpaarzahl p = 3 auf, also 2 x p = 6 Einzelpole am Umfang des Rotors.

Die Stator-Nutzahl $N_1$ wird derart gewählt, dass die Ungleichung

$$\alpha_P \times N1 \neq 2 \times p \times N_M$$

erfüllt ist. Somit sind die Nutrastmomente möglichst klein.

Der Rotor ist im Stator angeordnet, wobei der Durchmesser der den Rotor aufnehmenden Ausnehmung im Stator einen Durchmesser $D_{i1}$ aufweist. Zwischen der Ausnehmung und dem Rotor besteht mindestens ein Luftspalt $\delta$. Der Luftspalt ist an dem maximalen Radius des Pols minimal, weist also dort den Wert $\delta$ auf.

Der die Wölbung umschreibende Radius $R_{pa}$ ist derart gewählt, dass gilt:

$$R_{pa} < - \delta + D_{i1}/2$$

Die Wölbung, also der gekrümmte Verlauf, des Pols in Umfangsrichtung ist also stärker gekrümmt als der Außenumfang des Rotors. Somit nimmt der Außenradius von der Mitte des Pols in Umfangsrichtung bis zu den Polkanten hin ab

Daher nimmt der Luftspalt $\delta$ im Bereich der Polkanten, welche an die Lücken angrenzen, einen maximalen Wert $\delta_{max}$ an.

Besonders niedrige Rastmomente werden erzielt bei Erfüllen der folgenden Dimensionierungsbedingungen:

$$0,8 \leq \alpha_P \leq 0,85$$

und

$$2 \times \delta \leq \delta_{max} \leq 3 \times \delta$$

Mittels des erfindungsgemäßen Aufbaus sind als Dauermagnete stets gleichartig aufgebaute quaderförmige Dauermagnete verwendbar und somit in einfacher Weise der Rotor herstellbar.

Das Blechpaket 7 weist eine mittig zur Rotorwelle angeordnete Ausnehmung 9 zur Aufnahme der Rotorwelle und außerdem Ausnehmungen 8 zur Reduktion des Trägheitsmoments auf, wobei die Ausnehmungen 8 in Umfangsrichtung mittig zu den Polen angeordnet sind und in Umfangsrichtung voneinander jeweils regelmäßig beabstandet sind.

Im Blechpaket des Rotors sind in Umfangsrichtung regelmäßig voneinander beabstandete Ausnehmungen (8) zur Reduktion des Trägheitsmoments vorgesehen,

deren maximale Ausdehnung in radialer Richtung jeweils in der in Umfangsrichtung bestimmten Mitte eines jeweiligen zugeordneten Pols angeordnet ist,

wobei die Anzahl der Pole der Anzahl der Ausnehmungen (8) gleicht,

wobei die radiale Ausdehnung der Ausnehmungen (8) in Umfangsrichtung symmetrisch zur jeweiligen in Umfangsrichtung bestimmten Polmitte verläuft,

wobei der Querschnitt einer jeweiligen Ausnehmung (8) einem abgerundeten Dreieck entspricht. Somit ist nicht nur für das Trägheitsmoment sondern auch für den magnetischen Fluss ein vorteilhafter Verlauf erreicht.

Bei weiteren erfindungsgemäßen Ausführungsbeispielen wird zur weiteren Verringerung von Rastmomenten in axialer Richtung ein gleichartiger Aufbau des Rotors vorgesehen, der allerdings einen Versatz in Umfangsrichtung aufweist. Dabei ist vorteiligerweise ein Versatz der Pole mit einem Versatzwinkel von 180° / $KGV(N_1, 2 \times p)$ gewählt, wobei KGV das kleinste gemeinsame Vielfache bezeichnet, insbesondere von $N_1$ und der Polanzahl. In Weiterbildung sind auch weitere Aufbauten axial beabstandet vorsehbar, die zueinander einen jeweiligen Versatzwinkel aufweisen oder auch entsprechende Aufbauten mit einem kontinuierlichen Schrägungswinkel sind ermöglicht. Bei diskreter Ausführung wird jeder axial nachfolgende Bereich um einen Versatzwinkel zu dem ihm axial vorhergehenden Bereich in Umfangsrichtung verdreht angeordnet.

**Bezugszeichenliste**

| 1 | Dauermagnet des ersten Pols |
|---|---|
| 2 | Dauermagnet des zweiten Pols |
| 3 | Dauermagnet des dritten Pols |
| 4 | Dauermagnet des vierten Pols |
| 5 | Dauermagnet des fünften Pols |
| 6 | Dauermagnet des sechsten Pols |
| 7 | Blechpaket |
| 8 | Ausnehmung zur Reduktion des Trägheitsmoments |
| 9 | Ausnehmung zur Aufnahme der Rotorwelle |

| $R_{pa}$ | die Wölbung des Pols umschreibender Radius |
|---|---|
| $\delta$ | Luftspalt |
| $\delta_{max}$ | maximaler Luftspalt |
| $N_M$ | Anzahl der Dauermagnete pro Pol |
| p | Polpaarzahl |
| $N_1$ | Stator-Nutzahl |
| $\alpha_P$ | Polbedeckung |

**Patentansprüche**

1. Synchronmotor, aufweisend einen Stator mit Statorwicklung und einen Rotor, auf dem magnetische Pole aus dauermagnetischem Material gebildet sind, **dadurch gekennzeichnet, dass** jeder Pol eine nach radial außen gewölbte, insbesondere das dauermagnetische Material umschreibende, Außenkontur aufweist,

**wobei der Pol im Bereich der gewölbten Außenkontur ein lokales Maximum des Radialabstandes als Funktion des Umfangswinkels aufweist, insbesondere also wobei jeder Pol einen maximalen Radialabstand aufweist, der größer ist als der maximale Radialabstand des Rotors in einem Umfangswinkelbereich zwischen zwei in Umfangsrichtung nächst benachbarten Polen,**

wobei in Umfangsrichtung 2 x p Pole, insbesondere also Einzelpole, ausgeprägt sind, wobei p die Polpaaranzahl ist,

**wobei jeder Pol zwei oder mehr Dauermagnete aufweist,**

**wobei alle Dauermagnete aller Pole geometrisch gleichartig ausgeführt sind**

**wobei die Dauermagnete jeweils quaderförmig ausgeführt sind,**

**wobei die Dauermagnete auf einem aus gestapelten Einzelblechen Blechpaket angeordnet sind, wobei jeder Dauermagnet auf einem ebenen Flächenabschnitt des Blechpakets aufgesetzt und verbunden ist, wobei das ebene Flächenstück sich in der Stapelrichtung und quer dazu erstreckt.**

2. Synchronmotor nach Anspruch 1,
   **dadurch gekennzeichnet, dass**
   der umschreibende Außenradius, insbesondere also Wölbungsradius, des jeweiligen Pols in Umfangsrichtung von der Mitte des Pols aus abnimmt, insbesondere bis zur in Umfangsrichtung außen liegenden Polkante,
   insbesondere wobei der umschreibende Radius derjenige Radius ist, welcher die Dauermagnete nicht schneidet sondern nur berührt, also nur einen oder zwei Schnittpunkte aufweist mit dem jeweiligen Dauermagnet.

3. Synchronmotor nach mindestens einem der vorangegangenen Ansprüche,
   **dadurch gekennzeichnet, dass** die Dauermagnete sich nur in der Magnetisierung unterscheiden, also unterschiedlich magnetisiert sind.

4. Synchronmotor nach mindestens einem der vorangegangenen Ansprüche,
   **dadurch gekennzeichnet, dass**
   die Stator-Nutzahl $N_1$ des Stators derart gewählt ist, dass die Ungleichung

$$\alpha_P \times N_1 \neq 2 \times p \times N_M$$

   erfüllt ist, wobei $\alpha_P$ die Polbedeckung ist, p die Polpaarzahl und $N_M$ die Anzahl der Dauermagnete pro Pol.

5. Synchronmotor nach mindestens einem der vorangegangenen Ansprüche,
   **dadurch gekennzeichnet, dass**
   die Wölbung einen Wölbungsradius $R_{pa}$ aufweist, die kleiner ist als der Radius $D_{i1}/2$ der Aufnahmeausnehmung im Stator, insbesondere also die Wölbung stärker gekrümmt ist als die Aufnahmeausnehmung im Stator,
   insbesondere so dass gilt:

$$R_{pa} < -\delta + D_{i1}/2$$

   wobei $\delta$ der Luftspalt zwischen maximalem Außenradius des Rotors und minimalem Innenradius der Aufnahmeausnehmung im Stator zur Aufnahme des Rotors ist und wobei $D_{i1}$ der Durchmesser der Aufnahmeausnehmung im Stator zur Aufnahme des Rotors ist.

6. Synchronmotor nach mindestens einem der vorangegangenen Ansprüche,
   **dadurch gekennzeichnet, dass**
   für die Polbedeckung gilt:

$$0{,}8 \leq \alpha_P \leq 0{,}85.$$

7. Synchronmotor nach mindestens einem der vorangegangenen Ansprüche,
   **dadurch gekennzeichnet, dass**
   der an den Polkanten auftretende maximale Luftspalt zwischen Pol und Aufnahme Ausnehmung derart gewählt ist, dass gilt:

$$2 \times \delta \leq \delta_{max} \leq 3 \times \delta_,$$

   insbesondere so dass die Wölbung sich radial über weniger als das Doppelte des Luftspalts erstreckt.

8. Synchronmotor nach mindestens einem der vorangegangenen Ansprüche,
   **dadurch gekennzeichnet, dass**
   der Pol in axialer Richtung zwei gleichartige Abschnitte aufweist, zwischen welchen ein Versatz in Umfangsrichtung vorhanden ist, der einen Versatzwinkel von 180° / KGV($N_1$, 2 x p) beträgt, wobei KGV das kleinste gemeinsame Vielfache bezeichnet,
   $N_1$ die Stator-Nutanzahl und
   p die Polanzahl.

9. Synchronmotor nach mindestens einem der vorangegangenen Ansprüche,
   **dadurch gekennzeichnet, dass**
   die Stapelrichtung des Blechpakets in axialer Rich-

**10.** Synchronmotor nach mindestens einem der vorangegangenen Ansprüche,
**dadurch gekennzeichnet, dass**
der die Pole in axialer Richtung einen kontinuierlichen oder diskret angenäherten Schrägungswinkel aufweisen.

**11.** Synchronmotor nach mindestens einem der vorangegangenen Ansprüche,
**dadurch gekennzeichnet, dass**
die erste, nicht triviale, nicht verschwindende Ordnung der Multipolentwicklung des Querschnitts des Rotors der Anzahl der Pole des Rotors entspricht.

**12.** Synchronmotor nach mindestens einem der vorangegangenen Ansprüche,
**dadurch gekennzeichnet, dass**
die erste, nicht triviale, nicht verschwindende Ordnung der Multipolentwicklung des Querschnitts des Rotors der Anzahl der Pole des Rotors entspricht und/oder dass
das erste, nicht triviale, nicht verschwindende höhere magnetische Multipolmoment des Rotors der Anzahl der Pole des Rotors entspricht.

**13.** Synchronmotor nach mindestens einem der vorangegangenen Ansprüche,
**dadurch gekennzeichnet, dass**
der Radialabstand der Außenkontur des Rotors eine nicht-konstante, periodische Funktion des Umfangswinkels ist, wobei die Anzahl der lokalen Maxima der Funktion der Anzahl der Pole am Umfang des Rotors entspricht.

**14.** Synchronmotor nach mindestens einem der vorangegangenen Ansprüche,
**dadurch gekennzeichnet, dass**
**im Blechpaket des Rotors sind in Umfangsrichtung regelmäßig voneinander beabstandete Ausnehmungen (8) zur Reduktion des Trägheitsmoments vorgesehen,**
**insbesondere deren maximale Ausdehnung in radialer Richtung jeweils in der in Umfangsrichtung bestimmten Mitte eines jeweiligen zugeordneten Pols angeordnet ist,**
**insbesondere wobei die Anzahl der Pole der Anzahl der Ausnehmungen (8) gleicht,**
**insbesondere wobei die radiale Ausdehnung der Ausnehmungen (8) in Umfangsrichtung symmetrisch zur jeweiligen in Umfangsrichtung bestimmten Polmitte verläuft,**
**insbesondere wobei der Querschnitt einer jeweiligen Ausnehmung (8) einem abgerundeten Dreieck entspricht.**

**Claims**

**1.** A synchronous motor, having a stator with stator winding and a rotor, on which magnetic poles made of permanent-magnetic material are formed,
**characterised in that**
each pole has an outer contour which is convex radially outwards, which in particular circumscribes the permanent-magnetic material,
wherein the pole in the region of the convex outer contour has a local maximum of the radial distance as a function of the angle at circumference, in particular therefore wherein each pole has a maximum radial distance which is greater than the maximum radial distance of the rotor in an angle-at-circumference region between two poles immediately adjacent in the peripheral direction,
wherein in the peripheral direction 2 x p poles, in particular therefore individual poles, are salient, p being the number of pole pairs,
wherein each pole has two or more permanent magnets,
wherein all the permanent magnets of all the poles are geometrically highly similar,
wherein the permanent magnets are each formed to be cuboid,
wherein the permanent magnets are arranged on a laminated core made from stacked individual laminations, wherein each permanent magnet is placed and connected on a flat surface portion of the laminated core, wherein the flat surface piece extends in the stacking direction and transversely thereto.

**2.** A synchronous motor according to Claim 1,
**characterised in that**
the circumscribing outer radius, in particular therefore radius of convexity, of the respective pole decreases in the peripheral direction from the centre of the pole outwards, in particular as far as the pole edge which lies to the outside in the peripheral direction,
in particular wherein the circumscribing radius is that radius which does not intersect but only touches the permanent magnets, i.e. has only one or two points of intersection with the respective permanent magnet.

**3.** A synchronous motor according to at least one of the preceding claims,
**characterised in that**
the permanent magnets differ only in their magnetisation, i.e. are differently magnetised.

**4.** A synchronous motor according to at least one of the preceding claims,
**characterised in that**
the stator slot number $N_1$ of the stator is selected such that the relationship

$$\alpha_P \times N_1 \neq 2 \times p \times N_M$$

is satisfied, wherein $\alpha_P$ is the pole pitch, p is the number of pole pairs and $N_M$ is the number of permanent magnets per pole.

5. A synchronous motor according to at least one of the preceding claims, **characterised in that** the convexity has a radius of convexity $R_{pa}$ which is smaller than the radius $D_{i1}/2$ of the receiving cutout in the stator, in particular therefore the convexity is more greatly curved than the receiving cutout in the stator, in particular so that:

$$R_{pa} < - \delta\, 5 + D_{i1}/2$$

wherein $\delta$ is the air gap between the maximum outer radius of the rotor and the minimum inner radius of the receiving cutout in the stator for receiving the rotor and wherein $D_{i1}$ is the diameter of the receiving cutout in the stator for receiving the rotor.

6. A synchronous motor according to at least one of the preceding claims, **characterised in that** for the pole pitch:

$$0.8 \leq \alpha_P \leq 0.85.$$

7. A synchronous motor according to at least one of the preceding claims, **characterised in that** the maximum air gap between pole and receiving cutout which occurs at the pole edges is selected such that:

$$2 \times \delta \leq \delta_{max} \leq 3 \times \delta,$$

in particular so that the convexity extends radially over less than double the air gap.

8. A synchronous motor according to at least one of the preceding claims, **characterised in that** the pole in the axial direction has two highly similar portions between which an offset in the peripheral direction is present which amounts to an offset angle of 180° / LCM($N_1$, 2 x p), wherein LCM is the lowest common multiple, $N_1$ is the stator slot number and

p is the pole number.

9. A synchronous motor according to at least one of the preceding claims, **characterised in that** the stacking direction of the laminated core is in the axial direction.

10. A synchronous motor according to at least one of the preceding claims, **characterised in that** the the [sic] poles in the axial direction have a continuous or discretely approximated angle of inclination.

11. A synchronous motor according to at least one of the preceding claims, **characterised in that** the first, non-trivial, non-vanishing order of the multipole expansion of the cross-section of the rotor corresponds to the number of poles of the rotor.

12. A synchronous motor according to at least one of the preceding claims, **characterised in that** the first, non-trivial, non-vanishing order of the multipole expansion of the cross-section of the rotor corresponds to the number of poles of the rotor and/or **in that** the first, non-trivial, non-vanishing higher magnetic multipole moment of the rotor corresponds to the number of poles of the rotor.

13. A synchronous motor according to at least one of the preceding claims, **characterised in that** the radial distance of the outer contour of the rotor is a non-constant, periodic function of the angle at circumference, the number of the local maxima of the function corresponding to the number of poles on the periphery of the rotor.

14. A synchronous motor according to at least one of the preceding claims, **characterised in that** cutouts (8) regularly spaced apart from each other in the peripheral direction for reducing the moment of inertia are provided in the laminated core of the rotor, in particular the maximum extent thereof in the radial direction is arranged in each case in the centre, determined in the peripheral direction, of a respective associated pole, in particular wherein the number of poles is identical to the number of cutouts (8), in particular wherein the radial extent of the cutouts (8) in the peripheral direction extends symmetrically to the respective pole centre determined in the peripheral direction,
in particular wherein the cross-section of a respective cutout (8) corresponds to a rounded-off triangle.

**Revendications**

1. Moteur synchrone, présentant un stator avec un bobinage de stator et un rotor sur lequel sont formés des pôles magnétiques en matériau à aimantation permanente,
**caractérisé en ce que** chaque pôle présente un contour extérieur bombé radialement vers l'extérieur, en particulier circonscrivant le matériau à aimantation permanente,
sachant que le pôle présente, dans la région du contour extérieur bombé, un maximum local de la distance radiale en fonction de l'angle inscrit, sachant donc en particulier que chaque pôle présente une distance radiale maximale qui est supérieure à la distance radiale maximale du rotor dans une plage d'angle inscrit entre deux pôles immédiatement voisins en direction périphérique,
sachant que 2 x p pôles, en particulier donc des pôles individuels, sont formés en direction périphérique, p étant le nombre de paires de pôles,
sachant que chaque pôle présente deux aimants permanents ou davantage,
sachant que tous les aimants permanents de tous les pôles sont réalisés géométriquement semblables,
sachant que les aimants permanents sont respectivement réalisés parallélépipédiques, sachant que les aimants permanents sont disposés sur un paquet de tôles constitué de tôles individuelles empilées, sachant que chaque aimant permanent est placé sur une partie de surface plane du paquet de tôles et lui est assemblé, sachant que la partie de surface plane s'étend dans la direction d'empilage et en direction perpendiculaire.

2. Moteur synchrone selon la revendication 1, **caractérisé en ce que** le rayon extérieur circonscrit, en particulier donc le rayon de bombé, du pôle respectif diminue en direction périphérique depuis le centre du pôle, en particulier jusque vers la corne polaire située à l'extérieur en direction périphérique,
sachant en particulier que le rayon circonscrit est le rayon qui ne coupe pas les aimants permanents mais se contente de les toucher, donc présente seulement un ou deux points d'intersection avec l'aimant permanent respectif.

3. Moteur synchrone selon au moins une des revendications précédentes, **caractérisé en ce que** les aimants permanents ne se différencient qu'en matière d'aimantation, donc sont différemment aimantés.

4. Moteur synchrone selon au moins une des revendications précédentes, **caractérisé en ce que** le nombre $N_1$ d'encoches du stator est choisi de telle sorte que l'inégalité $\alpha_P \times N_1 \# 2 \times p \times N_M$
est remplie, où $\alpha_P$ est le pas polaire, p le nombre de paires de pôles et $N_M$ le nombre d'aimants permanents par pôle.

5. Moteur synchrone selon au moins une des revendications précédentes, **caractérisé en ce que** le bombement présente un rayon de bombé $R_{pa}$ qui est inférieur au rayon $D_{i1}/2$ de l'évidement récepteur dans le stator, en particulier donc le bombement est plus fortement cintré que l'évidement récepteur dans le stator,
de sorte en particulier qu'on a :

$$R_{pa} < - \delta + D_{i1}/2$$

où $\delta$ est l'entrefer entre le rayon extérieur maximal du rotor et le rayon intérieur minimal de l'évidement récepteur dans le stator qui est destiné à recevoir le rotor, et où $D_{i1}$ est le diamètre de l'évidement récepteur dans le stator qui est destiné à recevoir le rotor.

6. Moteur synchrone selon au moins une des revendications précédentes, **caractérisé en ce qu'**on a pour le pas polaire :

$$0,8 \leq \alpha_P \leq 0,85.$$

7. Moteur synchrone selon au moins une des revendications précédentes, **caractérisé en ce que** l'entrefer maximal entre le pôle et l'évidement récepteur qui survient aux cornes polaires est choisi de telle sorte qu'on a :

$$2 \times \delta \leq \delta_{max} \leq 3 \times \delta,$$

de sorte en particulier que le bombement s'étend radialement sur moins du double de l'entrefer.

8. Moteur synchrone selon au moins une des revendications précédentes, **caractérisé en ce que** le pôle présente en direction axiale deux parties semblables, entre lesquelles est présent en direction périphérique un décalage qui est égal à un angle de décalage de 180° / KGV ($N_1$, 2 x p), où
KGV est le plus petit multiple commun,
$N_1$ est le nombre d'encoches du stator et
p est le nombre de pôles.

9. Moteur synchrone selon au moins une des revendications précédentes, **caractérisé en ce que** la direction d'empilage du paquet de tôles est réalisée en direction axiale.

10. Moteur synchrone selon au moins une des revendications précédentes, **caractérisé en ce que** les pôles présentent en direction axiale un angle d'inclinaison continu ou approché de manière discrète.

11. Moteur synchrone selon au moins une des revendications précédentes, **caractérisé en ce que** le premier ordre non trivial et non infiniment petit du développement multipolaire de la section du rotor correspond au nombre de pôles du rotor.

12. Moteur synchrone selon au moins une des revendications précédentes, **caractérisé en ce que** le premier ordre non trivial et non infiniment petit du développement multipolaire de la section du rotor correspond au nombre de pôles du rotor,
et/ou **en ce que** le premier moment multipolaire magnétique supérieur, non trivial et non infiniment petit, du rotor correspond au nombre de pôles du rotor.

13. Moteur synchrone selon au moins une des revendications précédentes, **caractérisé en ce que** la distance radiale du contour extérieur du rotor est une fonction périodique non constante de l'angle inscrit, sachant que le nombre de maxima locaux de la fonction correspond au nombre de pôles sur la périphérie du rotor.

14. Moteur synchrone selon au moins une des revendications précédentes, **caractérisé en ce que** des évidements (8) régulièrement espacés les uns des autres en direction périphérique sont prévus dans le paquet de tôles du rotor afin de réduire le moment d'inertie,
en particulier leur étendue maximale en direction radiale est respectivement disposée au centre, déterminé en direction périphérique, d'un pôle respectif associé,
sachant en particulier que le nombre de pôles est égal au nombre d'évidements (8) ;
sachant en particulier que l'étendue radiale des évidements (8) s'étend, en direction périphérique, symétriquement par rapport au centre de pôle respectif déterminé en direction périphérique,
sachant en particulier que la section d'un évidement respectif (8) correspond à un triangle arrondi.

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004194419 B
- EP 2073352 A
- JP H02211031 B
- DE 102005019370